# EUROPEAN PATENT APPLICATION

(11) **EP 4 215 454 A1**
(43) Date of publication of application: **26.07.2023**
(21) Application number: 21956259.2
(22) Date of filing: 21.12.2021
(51) Int. Cl.: B65D 75/42, B65D 75/52, G01N 1/10

(54) **DISPOSABLE CONTAINER AND PREPARATION AND DETECTION METHODS THEREFOR**

(30) Priority: 24.11.2021 CN 202111406854
(71) Applicant: Bio-Link Pharmaceutical Application System (Jiangsu) Co., Ltd., Nantong, Jiangsu 226503 (CN)
(72) Inventor: DING, Rong, Nantong, Jiangsu 226503 (CN); CHEN, Lin, Nantong, Jiangsu 226503 (CN); GAO, Jie, Nantong, Jiangsu 226503 (CN); ZHAO, Zhanyong, Nantong, Jiangsu 226503 (CN); CHEN, Haojun, Nantong, Jiangsu 226503 (CN)
(74) Representative: Epping - Hermann - Fischer
(86) International application number: PCT/CN2021/139901
(87) International publication number: WO 2023/092771

(57) **Abstract**

A disposable container (10) and a preparation and a detection methods thereof are disclosed. The disposable container (10) comprises: a to-be-used unit (12) comprising a first receiving portion (14) and a first communicating portion (16) in communication with the first receiving portion (14) , the first receiving portion (14) being configured for accommodating a liquid (18) and receiving and discharging the liquid (18) through the first communicating portion (16); and a detectable unit (20) including a second receiving portion (22) and a second communicating portion (24) in communication with the second receiving portion (22), the second receiving portion (22) being configured for accommodating a detection material (26) and receiving and discharging the detection material (26) through the second communicating portion (24), a specific marker level of the second receiving portion (22) being consistent with that of the first receiving portion (14).

## Description

This application claims the benefit of priority to Chinese patent application No. 202111406854.6, filed on Nov. 24, 2021, the entire disclosure of which are incorporated herein by reference.

### TECHNICAL FIELD

The present application relates to biopharmaceuticals, in particular to a disposable container and a preparation and a detection methods thereof.

### BACKGROUND

With the development of biopharmaceutical industry, disposable containers such as liquid storage bags are rapidly applied in large quantities. For biopharmaceuticals, the specific marker level in consumables such as liquid storage bags used in the production process often has a significant impact on the production process. In application scenarios, a large number of on-site tests are often and frequently needed for determining the specific marker level in consumables such as containers (e.g., liquid storage bags). However, the tested liquid storage bag is no longer able to be used in the production process, so it is not desirable and there is room for improvement.

### SUMMARY

An object of the current application is to provide an improved disposable container and a preparation and a detection methods thereof.

For the above purpose, one aspect of embodiments of the application relates to a disposable container including: a to-be-used unit including a first receiving portion and a first communicating portion in communication with the first receiving portion. The first receiving portion is configured for accommodating a liquid and receiving and discharging the liquid through the first communicating portion. The disposable container includes a detectable unit including a second receiving portion and a second communicating portion in communication with the second receiving portion. The second receiving portion is configured for accommodating a detection material and receiving and discharging the detection material through the second communicating portion. A specific marker level of the second receiving portion is consistent with that of the first receiving portion.

In some embodiments, a specific marker level of the detectable unit is consistent with that of the to-be-used unit.

In some embodiments, the to-be-used unit and the detectable unit have same or similar structures.

In some embodiments, a size of the to-be-used unit is greater than, less than or equal to the detectable unit.

In some embodiments, the disposable container includes a connecting portion separably connecting the to-be-used unit and the detectable unit.

In some embodiments, the connecting portion connects a portion of adjacent edges of the to-be-used unit and the detectable unit.

In some embodiments, the connecting portion is made of a film material.

In some embodiments, the disposable container includes a packaging unit encapsulating the to-be-used unit and the detectable unit.

In some embodiments, the to-be-used unit and the detectable unit are independent of each other.

In some embodiments, one of the to-be-used unit corresponds to one or more of the detectable unit(s).

In some embodiments, the specific marker level includes content(s) of one or more of ribonuclease, deoxyribonuclease, endotoxin, polymer material dissolution precipitates or other markers existing in an inner surface of the disposable container.

In some embodiments, the specific marker level is a level of not detected.

In some embodiments, the to-be-used unit and the detectable unit are film bags respectively.

In some embodiments, the first communicating portion includes a first feed connector and a first discharge connector spaced with the first feed connector.

In some embodiments, the first communicating portion includes a sampling connector.

In some embodiments, the second communicating portion includes a second feed connector and a second discharge connector spaced with the second feed connector.

Another aspect of embodiments of the application relates to a preparation method of the disposable container as described in the application. The preparation method includes: preparing the detectable unit and the to-be-used unit under same environmental condition(s) with same raw material(s) and by same process(es).

In some embodiments, the preparation method includes: synchronously preparing the to-be-used unit and the detectable unit.

Another aspect of embodiments of the application relates to a detection method of the disposable container as described in the application. The detection method includes: adding the detection material to the second receiving portion to detect the specific marker level consistent with that of the first receiving portion.

If the technical condition(s) permits, technical solutions of the above embodiments may be combined at will.

The present application will be further described herebelow in combination with accompanying drawings. Same or similar labels may be used in the drawings to refer to same or similar elements, devices, shapes, structures, steps, features, etc. in different embodiments, or the description of same or similar elements, devices, shapes, structures, steps, features, effects, etc. in different embodiments, as well as the description of prior art elements, devices, shapes, structures, steps, features, effects, etc. may be omitted.

### BRIEF DESCRIPTION OF THE DRAWINGS

FIG 1 is a front schematic view of a disposable container according to an embodiment of the application;
FIG 2 is a front schematic view of a disposable container according to another embodiment of the present application; and
FIG 3 is a front schematic view of a disposable container according to a yet another embodiment of the present application.

### DETAILED DESCRIPTION

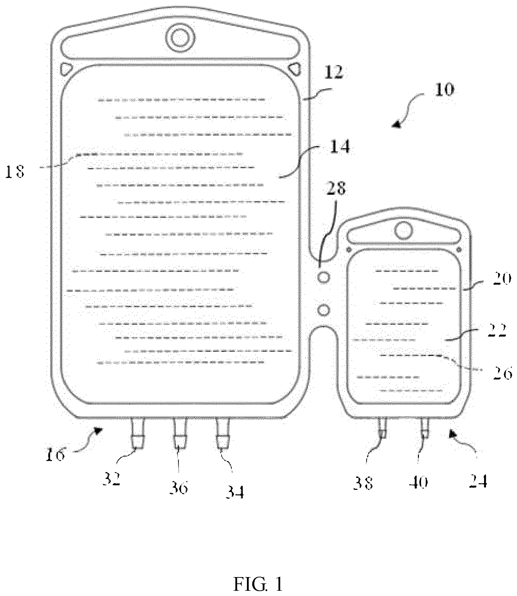

FIG 1 is a front schematic view of a disposable container according to an embodiment of the application. Referring to FIG 1, in some embodiments, a disposable container 10 includes a to-be-used unit 12 including a first receiving portion 14 and a first communicating portion 16 in communication with the first receiving portion 14. The first receiving portion 14 is configured for accommodating a liquid 18 and receiving and discharging the liquid 18 through the first communicating portion 16. The disposable container 10 includes a detectable unit 20 including a second receiving portion 22 and a second communicating portion 24 in communication with the second receiving portion 22. The second receiving portion 22 is configured for accommodating a detection material 26 and receiving and discharging the detection material 26 through the second communicating portion 24. A specific marker level of the second receiving portion 22 is consistent with that of the first receiving portion 14.

Terms "first", "second", and the like in this application are not used to represent the degree of importance, the order of priority, etc., but are intended to distinguish the device, element, shape, structure, position, etc. preceded thereby.

The specific marker level of the second receiving portion 22 of the disposable container 10 in the embodiment of the present application is consistent with that of the first receiving portion 14, so it is helpful to obtain the specific marker level of the first receiving portion 14 by detecting the specific marker level of the second receiving portion 22, so that the first receiving portion 14 may be used after detection.

The disposable container 10 may be a disposable liquid storage bag. The disposable container 10 may be used for storing the liquid 18 in the first receiving portion 14 in a biopharmaceutical process. The disposable container 10 may be called a disposable biological storage and transportation bag and may be applied to various disposable biopharmaceutical functional products.

The liquid 18 may include, but is not limited to, pure water, buffer solution, cell culture solution, etc.

In some embodiments, a specific marker level of the detectable unit 20 is consistent with that of the to-be-used unit 12.

In this way, it is convenient to obtain the specific marker level of the to-be-used unit 12 by detecting the specific marker level of the detectable unit 20, so that the to-be-used unit 12 may be used after detection.

In some embodiments, the to-be-used unit 12 and the detectable unit 20 have same or similar structures.

In this way, it may facilitate the processing of the disposable container 10, and the consistency of the specific marker levels of the to-be-used unit 12 and the detectable unit 20.

In some embodiments, a size of the to-be-used unit 12 is greater than, less than or equal to the detectable unit 20.

In this way, it may help to meet different detection needs.

In some embodiments, the disposable container 10 includes a connecting portion 28 separably connecting the to-be-used unit 12 and the detectable unit 20.

In this way, it may help to ensure that the storage and transportation environments and the specific marker levels of the to-be-used unit 12 and the detectable unit 20 are the same respectively. Moreover, the to-be-used unit 12 and the detectable unit 20 may be separated from each other at the connecting portion 28, so that when the detectable unit 20 is detected, the to-be-used unit 12 may be unaffected and may be used later.

In some embodiments, the connecting portion 28 connects a portion of adjacent edges of the to-be-used unit 12 and the detectable unit 20.

In this way, when the to-be-used unit 12 and the detectable unit 20 is separated from each other at the connecting portion 28, the to-be-used unit 12 and the detectable unit 20 is not damaged unnecessarily.

In some embodiments, the connecting portion 28 is made of a film material.

In this way, it may facilitate the separation of the to-be-used unit 12 from the detectable unit 20 at the connecting portion 28.

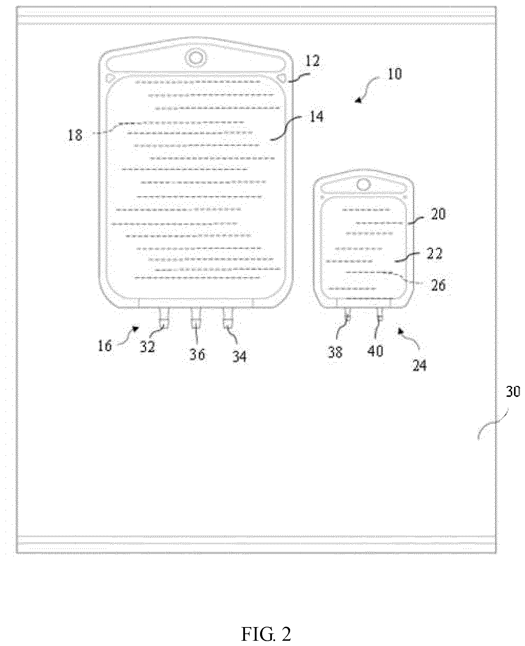

FIG 2 is a front schematic view of a disposable container according to another embodiment of the present application. As shown in FIG 2, in some embodiments, the disposable container 10 includes a packaging unit 30 encapsulating the to-be-used unit 12 and the detectable unit 20.

In this way, the storage and transportation environments of the to-be-used unit 12 and the detectable unit 20 may be the same, and the specific marker levels of the to-be-used unit 12 and the detectable unit 20 may be consistent.

The packaging unit 30 may accommodate the to-be-used unit 12 and the detectable unit 20. The packaging unit 30 may isolate the to-be-used unit 12 and the detectable unit 20 from an external environment. The packaging unit 30 may be a packaging bag.

In some embodiments, the to-be-used unit 12 and the detectable unit 20 are independent of each other.

In this way, it may help to take out the detectable unit 20 from the packaging unit 30 when the detectable unit 20 needs to be detected, while the to-be-used unit 12 is unaffected and may be used later.

In some embodiments, one of the to-be-used unit 12 corresponds to one or more of the detectable unit(s) 20.

In this way, it may be beneficial to meet different detection requirements. For example, multiple same or different specific marker level detections may be performed with multiple detectable units 20.

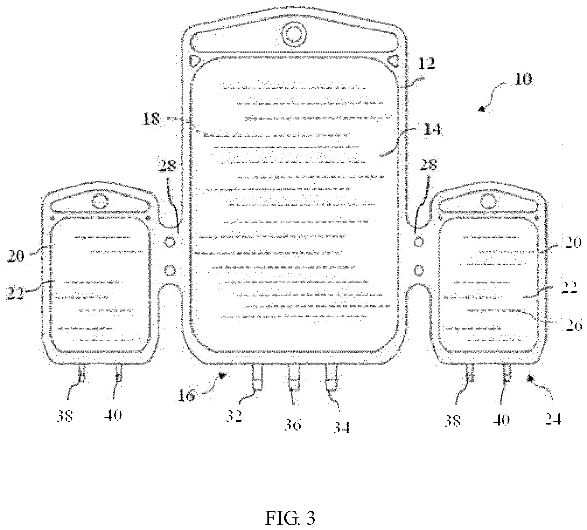

For example, as shown in FIGS. 1 and 2, one of the to-be-used unit 12 corresponds to one of the detectable unit 20, and the to-be-used unit 12 and the detectable unit 20 may be connected with or separated from each other. FIG 3 is a front schematic view of a disposable container according to a yet another embodiment of the present application. As shown in FIG 3, one of the to-be-used unit 12 may correspond to two of the detectable units 20, and the detectable units 20 may be connected to the to-be-used unit 12 through the connecting portions 28 on opposite sides of the to-be-used unit 12. In embodiments not shown in drawings, one of the to-be-used unit 12 may correspond to two or more of the detectable units 20, and the to-be-used unit 12 and the two or more of the detectable units 20 may be connected with or separated from each other.

In some embodiments, the specific marker level includes content(s) of one or more of ribonuclease, deoxyribonuclease, endotoxin, polymer material dissolution precipitates or other markers existing in an inner surface of the disposable container 10.

In this way, it may help the disposable container 10 to be used in the field where the content(s) of one or more of ribonuclease, deoxyribonuclease, endotoxin, polymer material dissolution precipitates or other markers present on the inner surface of the container 10 has limitation(s).

In some embodiments, the specific marker level is a level of not detected.

In this way, it may be advantageous for the disposable container 10 to be used in the field where the specific marker level, such as the highest value thereof, is limited.

For example, some application environments require that there is no endotoxin or ribonuclease in the disposable container 10, i.e. a content of endotoxin<0.25EU/mL, a content of ribonuclease<0.5pg/100uL, or a content of endotoxin and/or ribonuclease is as low as the detection equipment is not able to detect and at a level of not detected.

In some embodiments, the to-be-used unit 12 and the detectable unit 20 are film bags, respectively.

In this way, it may help the disposable container 10 to be applied to scenarios where disposable liquid storage bags are needed.

The to-be-used unit 12 and the detectable unit 20 may include medical plastic film materials. The medical plastic film material may be a multilayer co-extruded film. Examples of the medical plastic film material may include, but are not limited to, a multilayer co-extruded film of RENOLIT's brand 9101.

The to-be-used unit 12 and the detectable unit 20 may be two-dimensional or three-dimensional. Accordingly, the first receiving portion 14 and the second receiving portion 22 may be two-dimensional or three-dimensional. The to-be-used unit 12 and the detectable unit 20 in FIGS. 1-3 are two-dimensional. When in use, the first receiving portion 14 and the second receiving portion 22 may be substantially squarely edged planar bags.

In some embodiments, the first communicating portion 16 includes a first feed connector 32 and a first discharge connector 34 spaced with the first feed connector 32.

In this way, it is advantageous to input the liquid 18 into the first receiving portion 14 through the first feed connector 32, and discharge the liquid 18 from the first receiving portion 14 through the first discharge connector 34.

The first feed connector 32 and the first discharge connector 34 may at least partially protrude out of the first receiving portion 14, may be arranged on a same side of the first receiving portion 14, and may be adjacent to each other.

In some embodiments, the first communicating portion 16 includes a sampling connector 36.

In this way, it is helpful to take out a small amount of the liquid 18 from the first receiving portion 14 through the sampling connector 36.

The sampling connector 36, the first feed connector 32 and the first discharge connector 34 may respectively include pipe, and the diameter and length of the pipe of the sampling connector 36 may be smaller than those of the pipe of the discharge connector 34. The sampling connector 36 may be arranged between the first feed connector 32 and the first discharge connector 34.

In some embodiments, the second communicating portion 24 includes a second feed connector 38 and a second discharge connector 40 spaced with the second feed connector 38.

In this way, it is convenient to input the detection material 26 to the second receiving portion 22 through the second feed connector 38, and output material from the second receiving portion 22 through the second discharge connector 40.

Another aspect of embodiments of the present application relates to a preparation method of the disposable container 10 as described in the present application. The preparation method includes: preparing the detectable unit 20 and the to-be-used unit 12 under same environmental condition(s), with same raw material(s) and by same process(es).

In this way, it may help that the specific marker level of the detectable unit 20 and the to-be-used unit 12 of the disposable container 10 are consistent, so that the specific marker level of the first receiving portion 14 may be obtained by detecting the specific marker level of the second receiving portion 22, so that the first receiving portion 14 may be used after detection.

In some embodiments, the preparation method includes: synchronously preparing the to-be-used unit 12 and the detectable unit 20.

In this way, it is helpful to prepare the detectable unit 20 and the to-be-used unit 12 under same environmental condition(s) with same raw material(s) and by same process(es).

In some embodiments, the disposable container 10 is a liquid storage bag. During production, a film with an area no less than a surface area of the disposable container 10 may be taken, an effective film may be cut according to the design size, and multiple effective films may be aligned in such a way that an inner surface is adjacent to another inner surface. The multiple effective films are placed in a welding equipment for one or more times of edge welding or interface welding and packaged after quality control test inspection, to obtain the disposable container 10 including the to-be-used unit 12 and the detectable unit 20. That is, the to-be-used unit 12 and the detectable unit 20 may be produced simultaneously in the same workshop using complete and continuous raw material films or the same batch of raw material films, that is, same raw materials may be used synchronously in production.

Another aspect of embodiments of the present application relates to a detection method of the disposable container 10 as described in the application. The detection method includes: adding the detection material 26 to the second receiving portion 22 to detect the specific marker level consistent with that of the first receiving portion 14.

In this way, it is convenient to obtain the specific marker level of the first receiving portion 14 by detecting the specific marker level of the second receiving portion 22, so that the first receiving portion 14 may be used after detection.

The detection method and the detection material 26 may be selected according to the specific marker(s) to be detected and the level requirement(s). For example, when the specific marker is ribonuclease and the level requirement is a level of not included, a ribonuclease detection kit may be used for elution and fluorescence detection.

The following experimental examples may be used to help understanding embodiments of the invention, and are not intended to be used as limitations on claims.

### Experimental examples

### Example 1

A complete and continuous medical plastic film with an area no less than a surface area of a disposable container as shown in FIG 1 was taken. An effective film was cut according to the design size. Multiple effective films were aligned in such a way that an inner surface was adjacent to another inner surface. The multiple effective films were placed in a welding equipment for one or more times of edge welding or interface welding, and packaged after quality control test and inspection, to obtain the disposable container including a to-be-used unit and a detectable unit connected by a connecting portion with the to-be-used unit. The to-be-used unit was a liquid storage bag with a marked volume of 1L and an internal surface area of 792cm². The detectable unit was a liquid storage bag with a marked volume of 50ml and an internal surface area of 171cm².

### Example 2

A ribonuclease test kit of Thermo Fisher Scientific Company was used to elute the disposable container made in Example 1. Ribonuclease free water was added to the 1L and 50mL liquid storage bags to be tested prepared from Example 1 in a ratio of 36cm² of the internal surface area of the liquid storage bag to 1ml of the volume of the ribonuclease free water. That is, 22ml ribonuclease free water was added to the 1L liquid storage bag, and 4.7ml ribonuclease free water was added to the 50mL liquid storage bag. The liquid storage bags were fully shaken for 20 times and let stand for 10min to obtain eluents of the 1L and 50mL liquid storage bags to be tested. The eluents were respectively transferred to sample tubes without ribonuclease for test.

A ribonuclease free 96 well black plate was taken, and reagents of five sample groups shown in

Table 1 below were added to nine wells respectively:

**Table 1**

| Sample group ^{∗} Number of wells | volume of substrate per well | volume of 10X buffer solution per well | volume of solution to be tested per well |
|---|---|---|---|
| Positive control ^{∗} 1 well | 10µL | 10µL | 55µL ribonuclease free water + 5µL ribonuclease A |
| 0.05pg standard ^{∗} 2 wells | 10µL | 10µL | 10µL ribonuclease free water + 50µL ribonuclease A diluent (0.001pg/µL) |
| Negative control ^{∗} 2 wells | 10µL | 10µL | 60µL ribonuclease free water |
| 1L liquid storage bag eluent ^{∗} 2 wells | 10µL | 10µL | 60µL eluent of 1L liquid storage bag |
| 50mL liquid storage bag eluent ^{∗} 2 wells | 10µL | 10µL | 60µL eluent of 50mL liquid storage bag |

A fluorometer was turned on and parameters were set: the maximum excitation/emission (ex/em) value being 485/535nm. The fluorometer was preheated for 30min, the above-mentioned ribonuclease free 96 well black plate added with reagents of each sample group was placed in the fluorometer after the fluorometer was stabilized. The absorbance was read after holding at 37 °C for 30min, and the ribonuclease content in each sample was obtained according to a positive correlation between the absorbance and the ribonuclease content and is listed in Table 2 below.

**Table 2**

| Sample group | absorbance (AU) | ribonuclease content |
|---|---|---|
| Positive control | 48372 | 0.83pg |
| 0.05pg standard | 35246 | 0.05pg |
| | 38283 | 0.05pg |
| Negative control | 355 | <0.05pg |
| | 371 | <0.05pg |
| 1L liquid storage bag eluent | 459 | <0.05pg |
| | 426 | <0.05pg |
| 50mL liquid storage bag eluent | 412 | <0.05pg |
| | 426 | <0.05pg |

As is seen from the above that 1L liquid storage bag and 50ml liquid storage bag prepared synchronously under same environmental condition(s) with same raw material(s) and by same process(es) were eluted and tested based on a same area volume ratio. The sample absorbances were basically the same, and the ribonuclease contents were <0.05pg, consistent with each other. This indicates that the ribonuclease content of 50ml liquid storage bag may be detected to obtain the consistent ribonuclease content of 1L liquid storage bag, so 1L liquid storage bag may be used without detection of ribonuclease.

The various specific embodiments described above and shown in the attached drawings are only used to explain the invention, and are not the whole of the invention. Within the scope of the basic technical idea of the invention, any form of changes made by one of ordinary skill in the art relevant to the invention are within the protection scope of the invention.

## Claims

1. A disposable container (10), **characterized by** comprising:
a to-be-used unit (12) comprising a first receiving portion (14) and a first communicating portion (16) in communication with the first receiving portion (14), the first receiving portion (14) being configured for accommodating a liquid (18) and receiving and discharging the liquid (18) through the first communicating portion (16); and
a detectable unit (20) comprising a second receiving portion (22) and a second communicating portion (24) in communication with the second receiving portion (22), the second receiving portion (22) being configured for accommodating a detection material (26) and receiving and discharging the detection material (26) through the second communicating portion (24), a specific marker level of the second receiving portion (22) being consistent with that of the first receiving portion (14).

2. The disposable container (10) as claimed in claim 1, **characterized in that** a specific marker level of the detectable unit (20) is consistent with that of the to-be-used unit (12).

3. The disposable container (10) as claimed in claim 1, **characterized in that** the to-be-used unit (12) and the detectable unit (20) have same or similar structures.

4. The disposable container (10) as claimed in claim 1, **characterized in that** a size of the to-be-used unit (12) is greater than, less than or equal to that of the detectable unit (20).

5. The disposable container (10) as claimed in claim 1, **characterized by** comprising a connecting portion (28) separably connecting the to-be-used unit (12) and the detectable unit (20).

6. The disposable container (10) as claimed in claim 5, **characterized in that** the connecting portion (28) connects a portion of adjacent edges of the to-be-used unit (12) and the detectable unit (20).

7. The disposable container (10) as claimed in claim 5, **characterized in that** the connecting portion (28) is made of film material.

8. The disposable container (10) as claimed in claim 1, **characterized by** comprising: a packaging unit (30) encapsulating the to-be-used unit (12) and the detectable unit (20).

9. The disposable container (10) as claimed in claim 8, **characterized in that** the to-be-used unit (12) and the detectable unit (20) are independent of each other.

10. The disposable container (10) as claimed in any one of claims 1-9, **characterized in that** one of the to-be-used unit (12) corresponds to one or more of the detectable unit(s) (20).

11. The disposable container (10) as claimed in any one of claims 1-9, **characterized in that** the specific marker level includes content(s) of one or more of ribonuclease, deoxyribonuclease, endotoxin, polymer material dissolution precipitates or other markers existing in an inner surface of the disposable container (10).

12. The disposable container (10) as claimed in any one of claims 1-9, **characterized in that** the specific marker level is a level of not detected.

13. The disposable container (10) as claimed in any one of claims 1-9, **characterized in that** the to-be-used unit (12) and the detectable unit (20) are film bags, respectively.

14. The disposable container (10) as claimed in any one of claims 1-9, **characterized in that** the first communicating portion (16) comprises a first feed connector (32) and a first discharge connector (34) spaced with the first feed connector (32).

15. The disposable container (10) as claimed in claim 14, **characterized in that** the first communicating portion (16) comprises a sampling connector (36).

16. The disposable container (10) as claimed in any one of claims 1-9, **characterized in that** the second communicating portion (24) comprises a second feed connector (38) and a second discharge connector (40) spaced with the second feed connector (38).

17. A preparation method of the disposable container (10) as claimed in any one of claims 1-16, **characterized by** comprising: preparing the detectable unit (20) and the to-be-used unit (12) under same environmental condition(s), with same raw material(s) and by same process(es).

18. The preparation method as claimed in claim 17, **characterized by** comprising: synchronously preparing the to-be-used unit (12) and the detectable unit (20).

19. A detection method of the disposable container (10) as claimed in any one of claims 1-16, **characterized by** comprising: adding the detection material (26) to the second receiving portion (22) to detect the specific marker level consistent with that of the first receiving portion (14).
